# EUROPÄISCHE PATENTSCHRIFT

(11) **EP 3 036 082 B1**
(45) Veröffentlichungstag und Bekanntmachung des Hinweises auf die Patenterteilung: **13.01.2021**
(21) Anmeldenummer: 14761572.8
(22) Anmeldetag: 13.08.2014
(51) Int. Cl.: B29C 49/42, B29C 49/06, B29C 49/68

(54) **VERFAHREN UND VORRICHTUNG ZUR BLASFORMUNG VON ZUMINDEST BEREICHSWEISE STERILEN BEHÄLTERN**
METHOD AND DEVICE FOR BLOW-MOLDING CONTAINERS WHICH ARE STERILE AT LEAST IN SOME AREAS
PROCÉDÉ ET DISPOSITIF PERMETTANT DE PRODUIRE DES CONTENANTS STÉRILES AU MOINS PAR ENDROITS

(30) Priorität: 19.08.2013 DE 102013013590
(43) Veröffentlichungstag der Anmeldung: 29.06.2016
(73) Patentinhaber: KHS Corpoplast GmbH, 22145 Hamburg (DE)
(72) Erfinder: LEWIN, Frank, 22889 Tangstedt (DE); HEROLD, Thomas, 22941 Bargteheide (DE); MEYER, Jan Fabian, 22337 Hamburg (DE); GERHARDS, Martin, 22089 Hamburg (DE); KLATT, Dieter, 22147 Hamburg (DE); BAUMGARTE, Rolf, 22926 Ahrensburg (DE)
(74) Vertreter: Hausfeld, Norbert
(86) Internationale Anmeldenummer: PCT/EP2014/002220
(87) Internationale Veröffentlichungsnummer: WO 2015/024641

(56) Entgegenhaltungen:
- EP-A1- 2 604 410
- WO-A1-2006/136499
- WO-A1-2011/154294
- WO-A1-2012/083910
- DE-A1-102010 026 166
- DE-A1-102011 107 772
- FR-A1- 2 464 816
- US-A1- 2005 118 057
- US-A1- 2009 317 506

## Beschreibung

Die Erfindung betrifft ein Verfahren zur Herstellung von blasgeformten, mindestens bereichsweise sterilen Behältern, bei dem ein Vorformling aus einem thermoplastischen Material zunächst erwärmt und dann mit einem unter Druck stehenden Fluid beaufschlagt wird, sowie bei dem der Vorformling zumindest über einen Teilbereich seines Transportweges entlang eines ein Sterilgas führenden Kanals geführt wird, wobei der Transportweg des Vorformlings aus dem Kanal heraus mit dem Sterilgas zur Erzeugung eines Sterilgaskorridors beaufschlagt wird, in dem der Vorformling geführt wird.

Darüber hinaus betrifft die Erfindung eine Vorrichtung zur Herstellung von mindestens bereichsweise sterilen blasgeformten Behältern, die mit einer Heizstrecke zur Temperierung der Vorformlinge und einer Blaseinrichtung zur Blasverformung der Vorformlinge in die Behälter versehen ist, wobei entlang zumindest eines Teilbereiches des Transportweges des Vorformlings ein ein Sterilgas führender Kanal angeordnet ist, der die Bewegungsbahn des Vorformlings mit Sterilgas beaufschlagt zur Erzeugung eines Sterilgaskorridors, wobei der Vorformling auf seinem Transportweg entlang dieses Kanals und innerhalb des Sterilgaskorridors geführt ist
Eine Herstellung von zumindest bereichsweise sterilen blasgeformten Behältern erfolgt gemäß einem ersten Stand der Technik derart, dass diese Behälter nach ihrer Blasformung und vor einer Befüllung unter Verwendung von Wasserstoffperoxid oder anderen Chemikalien sterilisiert werden. Ebenfalls ist es bereits aus einem zweiten Stand der Technik bekannt, die bei der Blasformung der Behälter als Ausgangsprodukt verwendeten Vorformlinge zu sterilisieren, insbesondere den Bereich der inneren Oberfläche dieser Vorformlinge.

Bei einer Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung, z.B. in Form eines Ofens mit Heizkästen, sowie eine Blaseinrichtung auf, in deren Bereich der zuvor temperierte Vorformling durch biaxiale Orientierung zu einem Behälter expandiert wird. Die Expansion erfolgt in der Regel mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE -OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Hinsichtlich der Sterilisierung von Vorformlingen sind aus dem Stand der Technik bereits unterschiedliche Verfahren und Vorrichtungen bekannt, die jedoch alle verfahrensspezifische Nachteile aufweisen, die einer zuverlässigen Herstellung zumindest bereichsweise steriler Behälter durch Blasformung aus Vorformlingen bei gleichzeitig hohen Durchsatzraten entgegenstehen.

In der EP-A 1 086 019 wird beispielsweise die Sterilisierung von heißen Vorformlingen mit einem heißen gasförmigen Sterilisationsmittel beschrieben. Es werden hintereinander angeordnete separate Behandlungsstationen verwendet, nämlich ein erstes Heizmodul, ein Sterilisiermodul sowie ein zweites Heizmodul. Nachteilig ist hierbei das Temperaturverhalten des Vorformlings während des Sterilisiervorganges sowie das unkontrollierte Austreten des Sterilisationsmittels aus dem Vorformling innerhalb der Heizung. Ein weiterer Nachteil ist, dass es zu einer Neuverkeimung kommen kann nach Abschluss der Sterilisierung in dem Sterilisiermodul.

In der EP-A 1 896 245 wird ein Verfahren beschrieben, bei dem vor der Heizung ein gasförmiges Sterilisationsmittel in einen kalten Vorformling eingeleitet wird und hier kondensiert. Problematisch ist hier die Sicherstellung einer vollständigen Kondensatbildung auf der gesamten Innenfläche des Vorformlings, da das einströmende heiße Sterilisationsmittel die Innenwandtemperatur des Vorformlings erhöht. Darüber hinaus tritt auch hier das Sterilisationsmittel nach seiner Verdampfung im Bereich der Heizung unkontrolliert innerhalb der Heizung aus dem Vorformling aus. Auch hier besteht das Problem einer Neuverkeimung nach erfolgter Sterilisierung des Vorformlings.

In der EP-A 2 138 298 wird eine Vorrichtung beschrieben, bei der vorsorglich sowohl vor dem verwendeten Blasmodul als auch hinter dem verwendeten Blasmodul Sterilisiereinrichtungen angeordnet sind. Hieraus resultiert ein sehr großer maschinenbaulicher Aufwand, der das Problem der Neuverkeimung zumindest teilweise löst. Das Problem der Neuverkeimung besteht aber weiterhin bezüglich des weiteren Transportweges der fertig geblasenen Flasche hin zu einer Fülleinrichtung, in der die Flasche z.B. mit einem Getränk befüllt wird, und bis hin zu einer Schließeinrichtung, in der die gefüllte Flasche mit einem Verschluss versehen wird.

In der WO 2010/020530 A1 wird die Anordnung einer Sterilisiereinrichtung zwischen einer Heizung und dem Blasmodul beschrieben. Bei diesem Verfahren ist die Eintragsmenge von Sterilisationsmittel in den Bereich des Blasmoduls nur schwer vorhersehbar. Darüber hinaus ist die Austrittsmenge an Sterilisationsmittel in die Umgebung nicht kontrollierbar und eine entsprechende Kontamination nicht ausgeschlossen. Das Problem der Neuverkeimung wird ebenfalls nicht gelöst.

Nach einer erfolgten Sterilisierung und Beheizung der Vorformlinge werden diese einer Blaseinrichtung zugeführt und dort unter Verwendung von steriler Blasluft in die Behälter umgeformt. Dem Problem der Neuverkeimung wird gemäß dem bekannten Stand der Technik dadurch entgegengewirkt, dass der gesamte Bereich der Blaseinrichtung als Sterilraum ausgeführt wird. Die Bereitstellung und Aufrechterhaltung eines räumlich derart großen Sterilraumes erfordert einen sehr hohen gerätetechnischen Aufwand. Darüber hinaus besitzt dieser räumlich groß ausgedehnte Bereich eine Vielzahl potentieller Kontaminationsstellen, so dass eine ausreichende Sterilität nur äußerst schwer sichergestellt werden kann.

Eine bessere Lösung offenbart die WO 2012/083910 A1. Es wird dort kein die Blaseinrichtung und ggf. weitere Behandlungseinrichtungen wie Füller oder Verschließer umschließender Sterilraum vorgesehen, sondern es ist dort ein sterilgasführender Kanal gezeigt, an dem entlang der Vorformling bzw. der fertig geblasene Behälter geführt wird. In dem Kanal sind Austrittsöffnungen vorgesehen, aus denen das Sterilgas zur Erzeugung eines mit Sterilgas beaufschlagten Korridors herausströmen kann. Der Vorformling wird in diesem Sterilgaskorridor geführt und dabei von dem Sterilgas beaufschlagt und umströmt. Eine Neuverkeimung ist dadurch wirksam verhindert

Weitere Stand der Technik wird in US2005118057A1, US2009317506A1 und FR2464816A1 offenbart.

Aufgabe der vorliegenden Erfindung ist es, ein Verfahren der einleitend genannten Art weiter dahingehend zu verbessern, dass in einfacher Weise die Sterilität der blasgeformten Behälter gewährleistet und eine Neuverkeimung noch wirkungsvoller verhindert werden kann. Letzterer Aspekt kann in Abgrenzung zur Sterilisierung als Sterilhaltung bezeichnet werden.

Diese Aufgabe wird erfindungsgemäß mit den Merkmalen der unabhängigen Ansprüchen 1 und 8 gelöst.

Diese Strahlungsquellen können stationär angeordnet sein, z.B. am Sterilgas führenden Kanal, oder sich entlang der Transportstrecke mit den Vorformlingen mitbewegen, z.B. durch Anordnung an den Transporteinrichtungen für die Vorformlinge, z.B. an den Transportsternen oder Zangen. Die mitbewegende Anordnung kann vorteilhaft sein, um den Vorformling zuverlässig und unterbrechungsfrei mit Strahlung zu beaufschlagen. Die stationäre Anordnung bietet hingegen konstruktive Vorteile und erleichtert die Versorgung der Strahlungsquellen.

Vorteilhafte Ausgestaltungen der Erfindung werden in den Unteransprüchen genannt.
Die Anordnung der Strahlungsquellen erfolgt mit Vorteil in Transportrichtung hintereinanderliegend an dem Kanal und auf den Sterilgaskorridor ausgerichtet.

Gegenüber anderen Anordnungen, z.B. entfernt vom Kanal, hat dies den Vorteil, dass keine zusätzlichen Halterungen benötigt werden und z.B. der Kanal und die Strahler bei vorhandenen Maschinen einfach nachrüstbar sind. Auch die Ausrichtung der Strahler ist dadurch vereinfacht, weil sie fest in Bezug auf den Kanal angeordnet werden können und keine nachträgliche und aufwendige Justierung erforderlich ist.

Für die Neuverkeimung ist insbesondere der Mündungsbereich der Vorformlinge kritisch. Mit Vorteil sind daher wenigstens einige Strahlungsquellen auf den Mündungsbereich der Vorformlinge gerichtet, z.B. indem sie aus seitlicher oder schräger Richtung den Höhenbereich mit Strahlung beaufschlagen, durch den der Mündungsbereich der Vorformlinge geführt wird, oder z.B. indem in vertikaler Richtung Strahlung auf den Mündungsbereich abgestrahlt wird. Bei mitfahrenden Strahlern ist die Strahlungsrichtung z.B. permanent auf den Mündungsbereich gerichtet, so dass die gewünschte Sterilhaltung zuverlässig erreicht wird.

Eine mögliche Ursache für eine Neuverkeimung kann dadurch wirksam vermieden werden, indem innerhalb des Kanals und in Transportrichtung hintereinanderliegend mehrere Strahlungsquellen angeordnet werden, die sterilisierende Strahlung auf die inneren Oberflächen des Kanals emittieren. Auf diese Weise wird sichergestellt, dass auch durch das zugeführte und aus dem Kanal ausströmende Sterilgas keine Keimverschleppung aus dem Kanal in den Vorformling oder in den geblasenen Behälter hinein erfolgt. Zugleich wird auch das in dem Kanal geführte Sterilgas fortlaufend bestrahlt und somit ebenfalls zuverlässig keimfrei gehalten, wobei es ja bereits steril in den Kanal eingespeist wird.

Zur zuverlässigen Vermeidung einer Verkeimung der Vorformlinge vor der Blasformung erstreckt sich der mit Strahlungsquellen ausgestattete Kanal mit Vorteil zumindest von der Heizeinrichtung bis zur Blasformungseinrichtung. Weitere Vorteile im Hinblick auf eine zuverlässige Vermeidung von Verkeimung ergeben sich dann, wenn sich der Kanal zusätzlich oder alternativ zumindest von der Blasformungseinrichtung bis zur Fülleinrichtung erstreckt, und sich zusätzlich oder alternativ zumindest von der Fülleinrichtung bis zur Verschließeinrichtung erstreckt. In den genannten Erstreckungsbereichen können voneinander getrennte Kanäle angeordnet sein, die z.B. auch getrennt voneinander mit Sterilgas versorgt sind. Es kann sich dabei aber auch um Kanalabschnitte eines Gesamtkanals handeln. Es ist auch möglich, den Kanal an mehreren, entlang des Kanals verteilten Zuströmöffnungen mit Sterilgas zu versorgen, was insbesondere dann vorteilhaft ist, wenn der Kanal eine große Längserstreckung hat.

Bevorzugte Strahlungsquellen sind UV-Strahler, die sich gegenüber alternativen Strahlungsquellen wie z.B. Elektronenstrahlern, Mikrowellenstrahlern oder Röntgenstrahlern dadurch auszeichnen, dass sie technisch einfacher in der Handhabung sind und weniger Aufwand bei der Abschirmung zu betreiben ist. UV-Strahler sind insbesondere für die Sterilhaltung ausgezeichnet geeignet und bieten einen Kostenvorteil.

Die Anordnung von auf die Vorformlinge bzw. auf die Behälter ausgerichteten Strahlungsquellen in der Heizeinrichtung und/oder in der Blasformungseinrichtung und/oder in der Fülleinrichtung und/oder in der Verschließeinrichtung hat den Vorteil, dass auch in diesen Bereichen eine Verkeimung verhindert werden kann. Die Strahlung sorgt zudem dafür, dass die genannten Einrichtungen keimfrei bleiben, zumindest im von den Vorformlingen durchlaufenen Bereich.

Als Transportmittel haben sich rotierende Transporträder bewährt. Solche Transporträder können z.B. eingangsseitg der Blasformungsmaschine angeordnet sein, oder zwischen der Heizeinrichtung und der Blasformungseinrichtung, oder zwischen der Blasformungseinrichtung und einer nachgeschalteten Fülleinrichtung, oder zwischen einer Fülleinrichtung und einer nachgeschalteten Verschließeinrichtung. In allen diesen Fällen ist es sinnvoll, dass sich der mit Strahlern ausgestattete Kanal wenigstens entlang des Teilumfangs des Transportrades erstreckt, auf dem der Transport erfolgt. Denn in allen diesen genannten Übergangsbereichen zwischen den verschiedenen Behandlungsstationen kann potentiell eine Verkeimung stattfinden, so dass eine Sterilhaltung wünschenswert ist.

Die vorstehend genannten Strahlungsquellen lassen sich mit besonderem Vorteil auch dazu verwenden, beim Hochfahren der Blasformungsmaschine, womit auch eventuell nachgeschaltete Füll- und Verschließeinrichtungen mit gemeint sein sollen, eine Sterilisierung der Maschine oder bestimmter Maschinenbereiche zu bewirken. Die Strahler werden dazu auch während des Hochfahrens angeschaltet und können dadurch ihre sterilisierende Wirkung entfalten. In gleicher Weise gilt dies für Unterbrechungen im Blasformungsprozess, bei denen die Blasformungsmaschine im Inline-Betrieb weiterfährt, also noch nicht heruntergefahren wird. Auch in diesem Inline-Betrieb bleiben die Strahler mit Vorteil angeschaltet, um sterilisierend einzuwirken.

Die Strahlungsquellen können z.B. in einem Pulsbetrieb arbeiten oder in einem Dauerbetrieb permanent Strahlung emittieren. Es ist bekannt, dass z.B. gepulst arbeitende UV-Strahler besonders intensitätsstarke Strahlung emittieren können. Soweit z.B. im vorstehenden Absatz von eingeschalteten Strahlern die Rede ist so meint dies auch, dass Strahler, die gepulst arbeiten, während des Inline-Betriebes der Blasmaschine in diesem Pulsbetrieb arbeiten.

In den Zeichnungen sind zur weiteren Erläuterung der Erfindung Ausführungsbeispiele schematisch dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung zur Verwendung von sterilgasführenden Kanälen zur Verbindung einer Heizeinrichtung und eines Blasrades sowie des Blasrades und einer Ausgabestrecke,
- Fig. 6: eine schematische Darstellung ähnlich zu Fig. 5 eines alternativen Ausführungsbeispiels,
- Fig. 7: eine schematische Darstellung zur Veranschaulichung der Anordnung des Kanals zur Erzeugung eines Sterilgaskorridors entlang einer Transportstrecke für die Vorformlinge,
- Fig. 8: eine gegenüber Fig. 7 abgewandelte Ausführungsform.

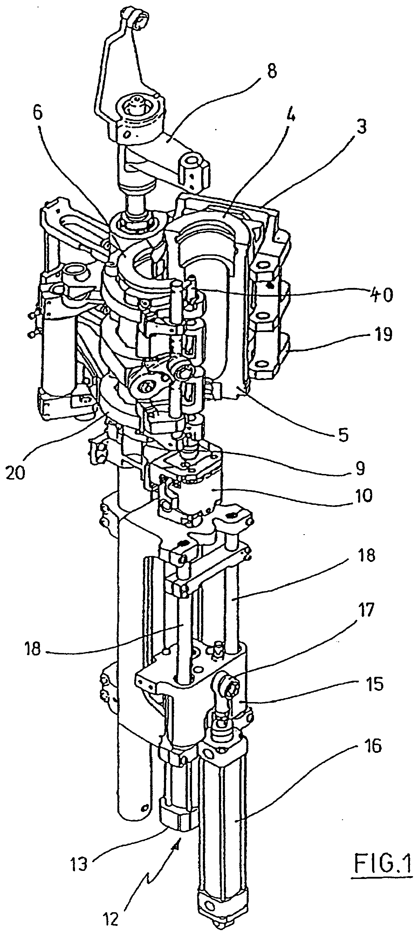

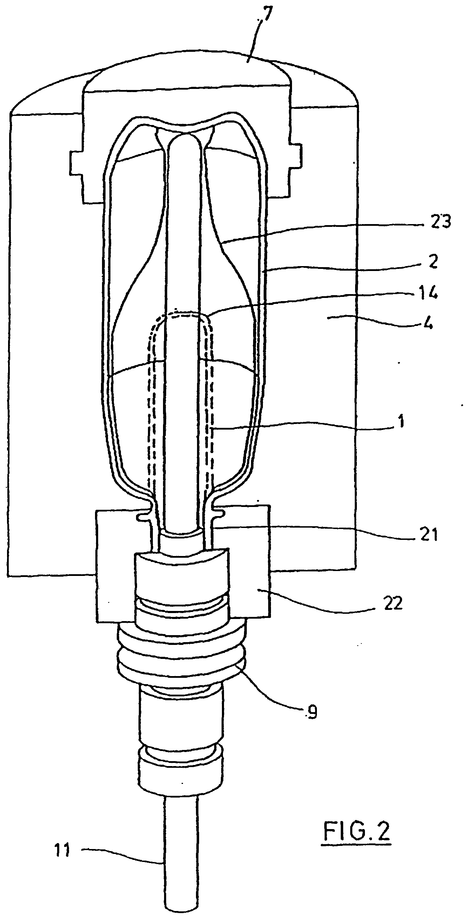

Der prinzipielle Aufbau einer Vorrichtung zur Umformung von Vorformlingen 1 in Behälter 2 ist in Fig. 1 und in Fig. 2 dargestellt.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Transportdorn 9 gehalten sein, der gemeinsam mit dem Vorformling 1 eine Mehrzahl von Behandlungsstationen innerhalb der Vorrichtung durchläuft. Es ist aber auch möglich, den Vorformling 1 beispielsweise über Zangen oder andere Handhabungsmittel direkt in die Blasform 4 einzusetzen.

Zur Ermöglichung einer Druckluftzuleitung ist unterhalb des Transportdornes 9 ein Anschlußkolben 10 angeordnet, der dem Vorformling 1 Druckluft zuführt und gleichzeitig eine Abdichtung relativ zum Transportdorn 9 vornimmt. Bei einer abgewandelten Konstruktion ist es grundsätzlich aber auch denkbar, feste Druckluftzuleitungen zu verwenden.

Eine Reckung des Vorformlings 1 erfolgt mit Hilfe einer Reckstange 11, die von einem Zylinder 12 positioniert wird. Grundsätzlich ist es aber auch denkbar, eine mechanische Positionierung der Reckstange 11 über Kurvensegmente durchzuführen, die von Abgriffrollen beaufschlagt sind. Die Verwendung von Kurvensegmenten ist insbesondere dann zweckmäßig, wenn eine Mehrzahl von Blasstationen 3 auf einem rotierenden Blasrad angeordnet sind. Eine Verwendung von Zylindern 12 ist zweckmäßig, wenn ortsfest angeordnete Blasstationen 3 vorgesehen sind.

Bei der in Fig. 1 dargestellten Ausführungsform ist das Recksystem derart ausgebildet, dass eine Tandem-Anordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, daß von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40.

Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

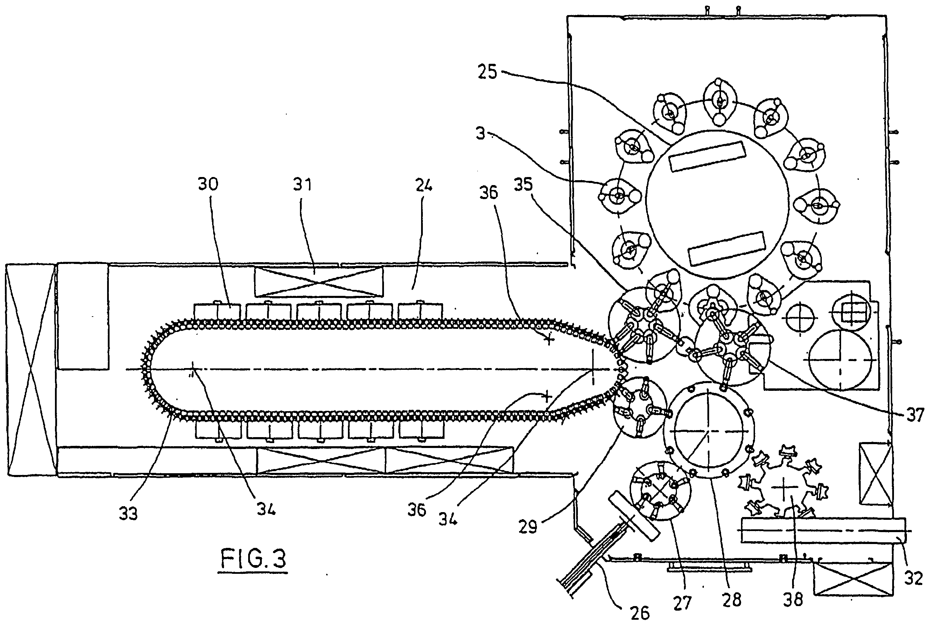

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 entlang eines Transportweges transportiert. Entlang der Heizstrecke 24 sind Heizstrahler 30 sowie Gebläse 31 angeordnet, um die Vorformlinge 1 zu temperieren. Nach einer ausreichenden Temperierung der Vorformlinge 1 werden diese an das Blasrad 25 übergeben, in dessen Bereich die Blasstationen 3 angeordnet sind. Die fertig geblasenen Behälter 2 werden von weiteren Übergaberädern einer Ausgabestrecke 32 zugeführt.

Um einen Vorformling 1 derart in einen Behälter 2 umformen zu können, daß der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird, und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 aus einer Vielzahl umlaufender Transportelemente 33 ausgebildet ist, die kettenartig aneinandergereiht und entlang von Umlenkrädern 34 geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad 29 und einem Eingaberad 35 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 29 und des Eingaberades 35 relativ zueinander erweist sich die dargestellte Anordnung als besonders zweckmäßig, da im Bereich der entsprechenden Ausdehnung der Heizstrecke 24 drei Umlenkräder 34, 36 positioniert sind, und zwar jeweils die kleineren Umlenkräder 36 im Bereich der Überleitung zu den linearen Verläufen der Heizstrecke 24 und das größere Umlenkrad 34 im unmittelbaren Übergabebereich zum Übergaberad 29 und zum Eingaberad 35. Alternativ zur Verwendung von kettenartigen Transportelementen 33 ist es beispielsweise auch möglich, ein rotierendes Heizrad zu verwenden.

Nach einem fertigen Blasen der Behälter 2 werden diese von einem Entnahmerad 37 aus dem Bereich der Blasstationen 3 herausgeführt und über das Übergaberad 28 und ein Ausgaberad 38 zur Ausgabestrecke 32 transportiert.

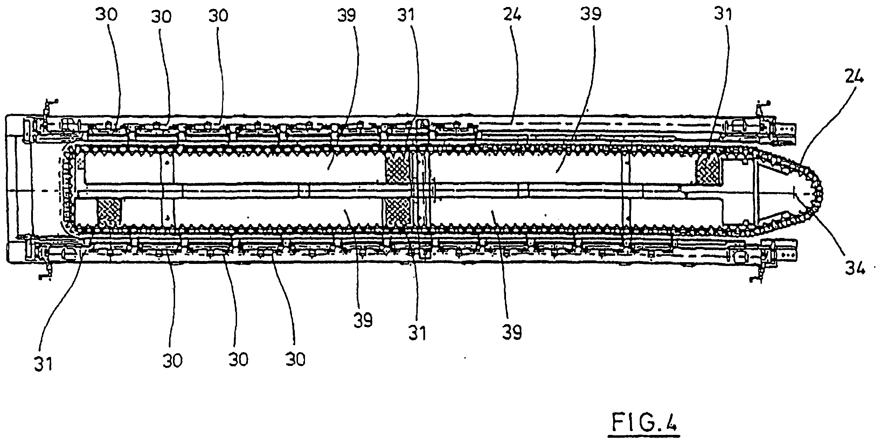

In der in Fig. 4 dargestellten modifizierten Heizstrecke 24 können durch die größere Anzahl von Heizstrahlern 30 eine größere Menge von Vorformlingen 1 je Zeiteinheit temperiert werden. Die Gebläse 31 leiten hier Kühlluft in den Bereich von Kühlluftkanälen 39 ein, die den zugeordneten Heizstrahlern 30 jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge 1 realisiert. Die Kühlluftkanäle 39 können im Bereich von den Heizstrahlern 30 gegenüberliegenden Oberflächen Reflektoren für die Heizstrahlung bereitstellen, ebenfalls ist es möglich, über die abgegebene Kühlluft auch eine Kühlung der Heizstrahler 30 zu realisieren.

Nicht gezeigt ist eine Sterilisiereinrichtung, die z.B. im Bereich der Heizstrecke 24 angeordnet sein kann, wie dies z.B. in der WO 2012/083910 A1 gezeugt ist, auf die und auf deren Inhalt Bezug genommen wird. Die Sterilisiereinrichtung kann aber auch an anderer Stelle, insbesondere vor oder nach der Heizstrecke angeordnet sein. In einer typischen Sterilisiereinrichtung wird ein Sterilisationsmittel vorzugsweise in einem gasförmigen Zustand in den Vorformling 1 eingeleitet. Hinsichtlich des Sterilisationsmittels ist insbesondere an die Verwendung von Wasserstoffperoxid gedacht.

Bei den dargestellten Ausführungsbeispielen der Figuren 3 und 4 sind die Heizstrahler 30 entlang einer Transportrichtung der Vorformlinge 1 durch die Heizstrecke 24 einseitig angeordnet. Den Heizstrahlern 30 gegenüberliegend sind in der Regel Reflektoren positioniert. Typischerweise werden die Heizstrahler 30 im Bereich von Heizkästen angeordnet, wobei auf einer den Vorformlingen 1 abgewandten Seite der Heizstrahler 30 vom Heizkasten gehalterte Reflektoren angeordnet sind. Vorzugsweise weisen die Reflektoren ein Reflektionsprofil auf. Zwischen den Heizstrahlern 30 und den Vorformlingen 1 kann eine Filterscheibe positioniert werden, die frequenzselektive Eigenschaften aufweist. Die Filterscheibe kann beispielsweise aus Quarzglas bestehen.

Vorzugsweise generieren die Heizstrahler 30 eine Heizstrahlung im NIR-Bereich. Verwendbar sind aber auch Infrarot-Strahler, lichtemittierende Dioden oder Strahleinrichtungen für Mikrowellenenergie oder Hochfrequenz-Energie.

Gegebenenfalls ist auch eine Kombination von zwei oder mehr der vorstehend aufgeführten Wärmequellen möglich.

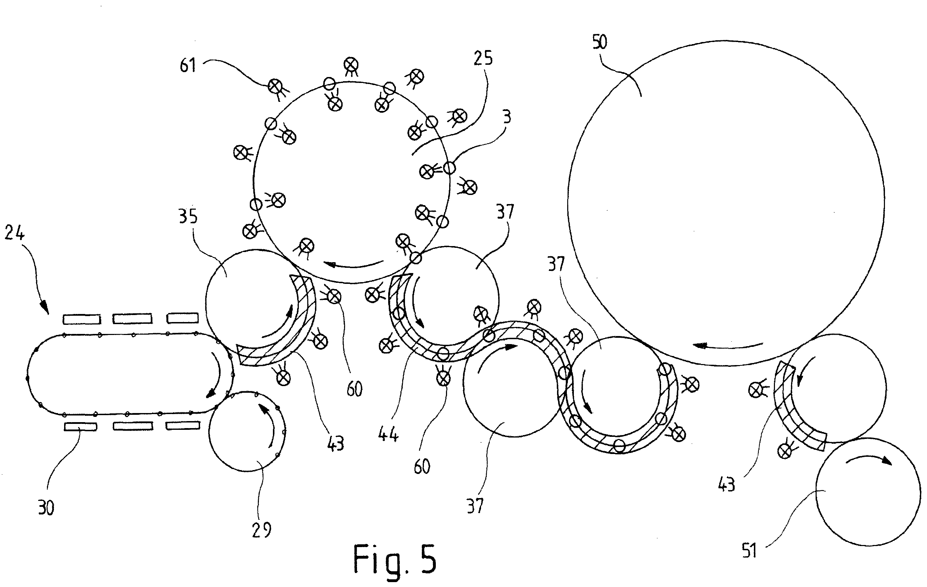

Fig. 5 zeigt eine schematische Darstellung ähnlich zur Darstellung in Fig. 3, jedoch stärker schematisiert. Die Vorformlinge 1 werden hier im Bereich der Heizstrecke 24 erwärmt. Die Heizstrecke 24 wird eingangsseitig von einem Eingaberad 29 mit Vorformlingen 1 beschickt. Ausgangsseitig werden die auf Blasformungstemperatur erwärmten Vorformlinge 1 auf ein Transferrad 35 übergeben. Ausgehend vom Ende der Heizstrecke 24 erstreckt sich in Richtung auf das Blasrad 25 ein Kanal 43. Der Kanal 43 dient dazu, den Vorformling 1 mindestens abschnittsweise mit einem sterilen Gas derart zu beaufschlagen, daß eine Kontamination des Vorformlings 1 mit Keimen entlang des Transportweges ausgeschlossen ist. Der Kanal 43 ist dabei so angeordnet und geformt, dass er der Bewegungsbahn der Vorformlinge 1 auf dem Transferrad 35 folgt.

Im Bereich des Blasrades 25 wird der Vorformling 1 in eine Blasstation 3 eingesetzt. Auch hier wird für eine ausreichend sterile Handhabung des Vorformlings 1 gesorgt.

Ein Ausgabebereich des Blasrades 25 ist zumindest entlang des Entnahmerades 37 ebenfalls mit einem Kanal 44 ausgestattet, der in gleicher Weise wie der Kanal 43 einen ausreichend groß dimensionierten Sterilgaskorridor bereitstellt, durch den in diesem Fall die geblasenen Behälter 2 mindestens bereichsweise transportiert werden.

In stark vereinfachter Darstellung ist in Fig. 5 angedeutet, dass entlang des Kanals 43 und entlang des Kanals 44 Strahlungsquellen 60 angeordnet sind, die eine sterilisierende Strahlung emittieren. Ohne Beschränkung der Allgemeinheit soll nachfolgend davon ausgegangen werden, dass es sich dabei um UV-Strahler handelt.

UV-Strahler sind im Rahmen der vorliegenden Erfindung generell bevorzugte Strahlungsquellen, da sie sich gegenüber alternativen Strahlungsquellen wie z.B. Elektronenstrahlern, Mikrowellenstrahlern oder Röntgenstrahlern dadurch auszeichnen, dass sie technisch einfacher in der Handhabung sind und weniger Aufwand bei der Abschirmung zu betreiben ist. Geeignete UV-Strahler sind im Stand der Technik bekannt, z.B. UV-LED's, Amalgam-Niederdrucklampen, Quecksilberdampflampen (Niederdruck, Mitteldruck, Hochdruck und Höchstdruck), Excimer-Laser, Diodenlaser.

Es werden bevorzugt UV-Strahler als Strahlungsquellen angeordnet, die insbesondere in einem für die Sterilisierung geeigneten Wellenlängenbereich Strahlung emittieren, z.B. im Bereich von 180-300 nm, sei es schmal- oder breitbandig, sei es gepulst oder im Daueremissionsbetrieb. Es wird als optimal angesehen, wenn die Strahlung intensitätsstark im Bereich um 220 nm und/oder 265 nm ist.

In gleichermaßen vereinfachter Darstellung sind in Fig. 5 am Umfang des Blasrades 25 verteilt angeordnet Strahlungsquellen 61 gezeigt, die die Blasstationen 3, die Blasformen 5, 6 und/oder die Vorformlinge 1 und/oder die fertig geblasenen Flaschen 2 z.B. mit UV-Strahlung beaufschlagen. Die Strahler 61 können sich z.B. mit dem Blasrad 25 bewegen, indem sie z.B. auf dem Blasrad 25 befestigt sind. Sie können in Alternative dazu stationär außerhalb des Blasrades 25 angeordnet sein. Auch die Verwendung sowohl mitbewegter als auch stationärer Strahlungsquellen ist möglich und vorteilhaft, um eine möglichst lückenlose Sterilhaltung zu erreichen. Die genannten Strahlungsquellen 60, 61 dienen zu Beginn der Produktion der Blasmaschine primär der Sterilisierung der bestrahlten Bereiche. Darunter ist zu verstehen, dass nichtsterile Bereiche entkeimt werden. Während der laufenden Produktion dienen die Strahlungsquellen 60, 61 der Sterilhaltung. Darunter ist zu verstehen, dass bereits sterilisierte Bereiche gegen die Neuansiedlung von Keimen geschützt werden.

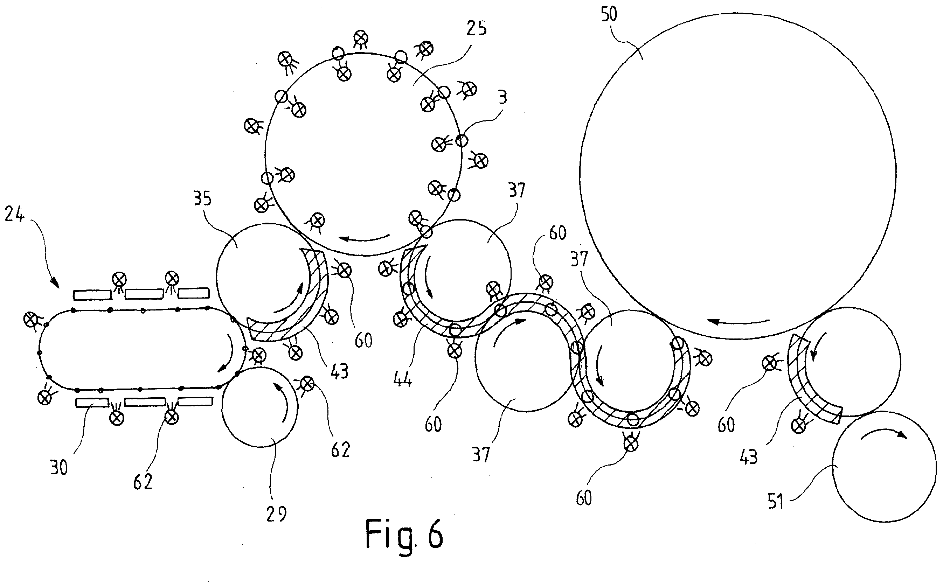

Fig. 6 zeigt eine Abwandlung zu Fig. 5. Es sind zusätzliche UV-Strahler 62 am Eingaberad 29 und in der Heizstrecke 24 angeordnet, die in diesen Bereichen ihre keimzerstörende Wirkung entfalten, und z.B. auf den Mündungsbereich 21 der vorbeigeführten Vorformlinge 1 gerichtet sind.

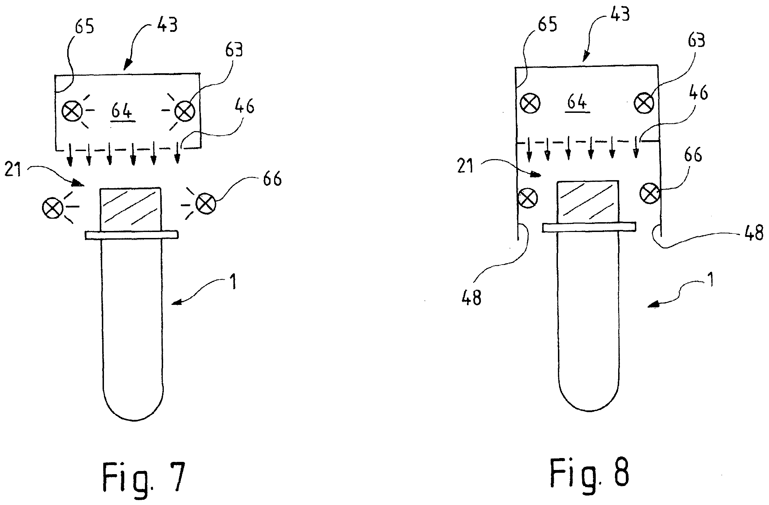

Fig. 7 zeigt in einer Querschnittdarstellung einen Vorformling 1, der entlang des Kanals 43 geführt ist. Der Kanal 43 weist eine nicht gezeigte Zuführöffnung für ein steriles Gas und eine Mehrzahl von Ausströmöffnungen 46 auf. Beim dargestellten Ausführungsbeispiel sind die Ausströmöffnungen 46 z.B. schräg zu einer vertikalen Richtung angeordnet. Dies führt zu einer Ausbreitungskomponente des aus dem Kanal 43 ausströmenden sterilen Gases in einer Transportrichtung der Vorformlinge 1 entlang des Kanals 43. Hierdurch wird eine Strömung des sterilen Gases in Richtung auf einen Eingabebereich des Blasrades 25 generiert, so dass ein Einsetzen der Vorformlinge 1 in die Blasstation 3 in einer sterilen Umgebung unterstützt wird.

Das sterile Gas strömt aus dem Kanal 43 derart aus, dass wenigstens der Mündungsabschnitt 21 des Vorformlings 1 innerhalb des sterilen Gases positioniert ist, so dass ein Zutritt von Keimen verhindert wird. Es entsteht auf diese Weise unterhalb des Kanals 43 ein Sterilgaskorridor. Bevorzugt bewegt sich der Vorformling 1 vollständig innerhalb dieses Korridors. Es wäre aber ausreichend, wenn lediglich der Mündungsbereich 21 innerhalb des Korridors bewegt würde. Dieser Korridor ist nach oben durch den Kanal 43 begrenzt und seitlich durch das Sterilgas, das aus den seitlichsten Ausströmöffnungen 46 austritt. Innerhalb des Korridors strömt Sterilgas, und der in dem Korridor entlanggeführte Vorformling 1 wird von Sterilgas umströmt und dadurch gegen Keimeintritt abgeschirmt.

Innerhalb des Kanals 43 sind UV-Strahler 63 angeordnet, die das insbesondere Kanalinnere 64 und auch das in dem Kanal 43 zugeführte Sterilgas mit UV-Strahlung beaufschlagen. Auch die Innenwände 65 des Kanals 43 werden permanent mit UV-Strahlung beleuchtet, so dass eine dauerhafte Keimfreiheit gewährleistet ist.

Unterhalb des Kanals 43 sind UV-Strahler 66 gezeigt, die seitlich auf Höhe des Mündungsbereiches 21 eines Vorformlings 1 und auf diesen Bereich ausgerichtet angeordnet sind. Diese Strahler 66 können z.B. am Kanal 43 befestigt sein.

Fig. 8 zeigt eine gegenüber der Ausführungsform in Fig. 7 abgewandelte Konstruktion. Es werden hier zusätzliche Seitenwände 48 verwendet, die den Mündungsabschnitt 21 des Vorformlings 1 zusätzlich seitlich abschirmen und den Sterilgaskorridor seitlich begrenzen. Die Seitenwände 48 unterstützen die Strömungsführung des sterilen Gases.

Der in Fig. 5 und 6 gezeigte Kanal 44, der sich ausgehend vom Blasrad 25 bis in den Bereich einer Fülleinrichtung 50 zur Befüllung der Behälter 2 mit einem Produkt erstreckt, kann in gleicher Weise aufgebaut sein, wie der vorstehend anhand der Fig. 5 und 6 beschriebene Kanal 43. Der in diesen Figuren dargestellte Vorformling 1 wäre in analoger Weise durch einen fertig geblasenen Behälter 2 zu ersetzen, dessen Mündungsbereich innerhalb und entlang des Sterilgaskorridors geführt wird.. Der Kanal 44 kann sich insbesondere bis hin zu einer Verschließeinrichtung 51 erstrecken. Es wird hierdurch für den gesamten Transportbereich des Behälters 2 eine ausreichend sterile Umgebung bereitgestellt.

Im Bereich der Blasstationen 3 werden vorzugsweise nur diejenigen Bereiche steril gehalten, die mit dem Mündungsabschnitt 21 oder einem Innenraum des Vorformlings 1 bzw. des Behälters 2 in Berührung kommen. Hinsichtlich der weiteren Bereiche des Vorformlings 1 bzw. des Behälters 2 werden hingegen keine Anforderungen an eine besondere Sterilität gestellt. Durch diese örtlich begrenzte Sterilität wird berücksichtigt, dass nach einer Befüllung der Behälter 2 mit dem abzufüllenden Produkt durch einen entsprechenden Verschluss der befüllte Innenraum des Behälters 2 steril gegenüber einer Umgebung abgegrenzt ist. Eventuell an einer äußeren Oberfläche anhaftende Keime können somit nicht in den Bereich des abgefüllten Produktes gelangen.

## Patentansprüche

1. Verfahren zur Herstellung von blasgeformten, mindestens bereichsweise sterilen Behältern (2), bei dem ein Vorformling (1) aus einem thermoplastischen Material auf einem Transportweg durch eine Blasformungsmaschine zunächst in einer Heizeinrichtung (24) erwärmt und dann in einer Blasformungseinrichtung (3, 25) mit einem unter Druck stehenden Fluid beaufschlagt wird, sowie bei dem der Vorformling (1) zumindest über einen Teilbereich seines Transportweges entlang eines ein Sterilgas führenden Kanals (43, 44) geführt wird, wobei der Transportweg des Vorformlings (1) aus dem Kanal (43, 44) heraus mit dem Sterilgas zur Erzeugung eines außerhalb des Kanals ausgebildeten Sterilgaskorridors beaufschlagt wird, in dem wenigstens der Mündungsbereich (21) des Vorformlings (1) geführt wird, wobei sich der Kanal (43, 44) zumindest von der Heizeinrichtung (24) bis zur Blasformungseinrichtung (3, 25) erstreckt,
**dadurch gekennzeichnet, dass**
entlang des Kanals (43, 44) und in Transportrichtung hintereinanderliegend mehrere Strahlungsquellen (60, 61, 62, 63, 66) angeordnet werden, die sterilisierende Strahlung auf den Kanal (43, 44) und/oder auf den außerhalb des Kanals ausgebildeten Sterilgaskorridor emittieren, wobei insbesondere mehrere Strahlungsquellen (60, 61, 62, 63, 66) in Transportrichtung hintereinanderliegend an dem Kanal (43, 44) angeordnet und auf den außerhalb des Kanals ausgebildeten Sterilgaskorridor gerichtet werden, und/oder wobei insbesondere wenigstens einige der Strahlungsquellen (60, 61, 62, 63, 66) auf den Mündungsbereich (21) der Vorformlinge (1) gerichtet werden.

2. Verfahren nach Anspruch 1, **dadurch gekennzeichnet, dass** innerhalb des Kanals (43, 44) und in Transportrichtung hintereinanderliegend mehrere Strahlungsquellen (63) angeordnet werden, die sterilisierende Strahlung auf die Innenwände (65) des Kanals (43, 44) emittieren.

3. Verfahren nach einem der vorhergehenden Ansprüche, wobei die fertig geblasenen Behälter (2) weiter zu einer Fülleinrichtung (50) transportiert werden, **dadurch gekennzeichnet, dass** sich der Kanal (43, 44) zumindest von der Blasformungseinrichtung (3, 25) bis zur Fülleinrichtung (50) erstreckt.

4. Verfahren nach dem Oberbegriff von Anspruch 3 oder Verfahren nach Anspruch 3, wobei die in der Fülleinrichtung (50) befüllten Behälter (2) weiter zu einer Verschließeinrichtung (51) transportiert werden, **dadurch gekennzeichnet, dass** sich der Kanal (43, 44) zumindest von der Fülleinrichtung (50) bis zur Verschließeinrichtung (51) erstreckt.

5. Verfahren nach einem der vorhergehenden Ansprüche, **dadurch gekennzeichnet, dass** die Strahlungsquellen (60, 61, 62, 63, 66) zumindest teilweise UV-Strahler sind und/oder in der Heizeinrichtung (24) und/oder in der Blasformungseinrichtung (3, 25) und/oder in der Fülleinrichtung (50) und/oder in der Verschließeinrichtung (51) auf die Vorformlinge (1) bzw. auf die Behälter (2) ausgerichtete Strahlungsquellen (60, 61, 62, 63, 66) angeordnet werden.

6. Verfahren nach einem der vorhergehenden Ansprüche, wobei die Vorformlinge (1) auf ihrem Transportweg von wenigstens einem rotierenden Transportrad (26, 27, 28, 29, 35, 37) geführt werden, **dadurch gekennzeichnet, dass** sich der Kanal (43, 44) wenigstens entlang des Teilumfangs des Transportrades (26, 27, 28, 29, 35, 37) erstreckt, auf dem der Transport erfolgt, wobei die Vorformlinge (1) insbesondere auf ihrem Transportweg von wenigstens zwei benachbarten rotierenden Transporträdern (26, 27, 28, 29, 35, 37) geführt werden, und sich dabei der Kanal (43, 44) wenigstens entlang der Teilumfänge der Transporträder (26, 27, 28, 29, 35, 37) erstreckt, auf denen der Transport auf den Transporträdern (26, 27, 28, 29, 35, 37) erfolgt.

7. Verfahren nach einem der vorhergehenden Ansprüche, **dadurch gekennzeichnet, dass** die Strahlungsquellen (60, 61, 62, 63, 66) während des Inline-Betriebes und/oder während des Hochfahrbetriebes der Blasformungsmaschine angeschaltet sind.

8. Vorrichtung zur Herstellung von mindestens bereichsweise sterilen blasgeformten Behältern (2), die mit einer Heizeinrichtung (24) zur Temperierung der Vorformlinge (1) und einer Blaseinrichtung (3, 25) zur Blasverformung der Vorformlinge (1) in die Behälter (2) versehen ist, wobei die Vorrichtung Führungsmittel (9, 26, 27, 28, 29, 35, 37) aufweist, mittels derer der Vorformling (1) auf einem Transportweg durch die Vorrichtung geführt ist, wobei entlang mindestens eines Teilbereiches des Transportweges für die Vorformlinge (1) mindestens ein ein Sterilgas führender Kanal (43, 44) angeordnet ist, der wenigstens eine Ausströmöffnung (46) aufweist, aus der das Sterilgas zur Ausbildung eines Sterilgaskorridors ausströmt, wobei der Kanal (43, 44) und die Ausströmöffnung (46) derart angeordnet und ausgebildet sind, dass zumindest der Mündungsbereich (21) der Vorformlinge (1) in dem sich außerhalb des Kanals ausgebildeten Sterilgaskorridor geführt ist, wobei sich der Kanal (43, 44) wenigstens von der Heizeinrichtung (24) bis zur Blasformungseinrichtung (3, 25) erstreckt,
**dadurch gekennzeichnet, dass**
entlang des Kanals (43, 44) und in Transportrichtung hintereinanderliegend mehrere Strahlungsquellen (60, 61, 62, 63, 66) angeordnet sind, die sterilisierende Strahlung auf den Kanal (43, 44) und/oder auf den Sterilgaskorridor emittierend angeordnet und ausgerichtet sind, wobei die Ausströmöffnung (46) insbesondere derart ausgerichtet ist, dass das Sterilgas mit einer Ausbreitungskomponente in Transportrichtung strömt.

9. Vorrichtung nach Anspruch 8, **dadurch gekennzeichnet, dass** mehrere Strahlungsquellen (60, 61, 62, 63, 66) in Transportrichtung hintereinanderliegend an dem Kanal (43, 44) und auf den Sterilgaskorridor ausgerichtet angeordnet sind, und/oder wobei wenigstens einige der Strahlungsquellen (60, 61, 62, 63, 66) auf den Mündungsbereich (21) der Vorformlinge (1) ausgerichtet angeordnet sind und/oder.

10. Vorrichtung nach einem der vorhergehenden Vorrichtungsansprüche, **dadurch gekennzeichnet, dass** innerhalb des Kanals (43, 44) und in Transportrichtung hintereinanderliegend mehrere sterilisierende Strahlung auf die Innenwand (65) des Kanals (43, 44) emittierende Strahlungsquellen (60, 61, 62, 63, 66) angeordnet sind.

11. Vorrichtung nach einem der vorhergehenden Vorrichtungsansprüche, wobei die fertig geblasenen Behälter (2) weiter zu einer Fülleinrichtung (50) transportiert werden, **dadurch gekennzeichnet, dass** sich der Kanal (43, 44) wenigstens von der Blasformungseinrichtung (3, 25) bis zur Fülleinrichtung (50) erstreckt.

12. Vorrichtung nach dem Oberbegriff von Anspruch 11 oder Vorrichtung nach Anspruch 11, wobei die in der Fülleinrichtung (50) befüllten Behälter (2) weiter zu einer Verschließeinrichtung (51) transportiert werden, **dadurch gekennzeichnet, dass** sich der Kanal (43, 44) wenigstens von der Fülleinrichtung (50) bis zur Verschließeinrichtung (51) erstreckt.

13. Vorrichtung nach einem der vorhergehenden Vorrichtungsansprüche, **dadurch gekennzeichnet, dass** die Strahlungsquellen (60, 61, 62, 63, 66) zumindest teilweise UV-Strahler sind.

14. Vorrichtung nach einem der vorhergehenden Vorrichtungsansprüche, **dadurch gekennzeichnet, dass** in der Heizeinrichtung (24) und/oder in der Blasformungseinrichtung (3, 25) und/oder in der Fülleinrichtung (50) und/oder in der Verschließeinrichtung (51) auf die Vorformlinge (1) bzw. auf die Behälter (2) ausgerichtete Strahlungsquellen (60, 61, 62, 63, 66) angeordnet sind.

15. Vorrichtung nach einem der vorhergehenden Vorrichtungsansprüche, wobei die Vorformlinge (1) auf ihrem Transportweg von wenigstens einem rotierenden Transportrad (26, 27, 28, 29, 35, 37) geführt sind, **dadurch gekennzeichnet, dass** sich der Kanal (43, 44) wenigstens entlang des Teilumfangs des Transportrades (26, 27, 28, 29, 35, 37) erstreckt, auf dem der Transport erfolgt, insbesondere wobei die Vorformlinge (1) auf ihrem Transportweg von wenigstens zwei benachbarten rotierenden Transporträdern (26, 27, 28, 29, 35, 37) geführt sind, und sich der Kanal (43, 44) dabei wenigstens entlang der Teilumfänge der Transporträder (26, 27, 28, 29, 35, 37) erstreckt, auf denen der Transport auf den Transporträdern (26, 27, 28, 29, 35, 37) erfolgt.

## Claims

1. A method for producing blow-moulded containers (2), which are sterile at least in some areas, in the case of which a preform (1) made of a thermoplastic material is first heated in a heating means (24) on a transport path through a blow-moulding machine, and is then supplied with a pressurized fluid in a blow-moulding means (3, 25), and in the case of which the preform (1) is guided at least over a subarea of its transport path along a channel (43, 44), which conducts a sterile gas, wherein the transport path of the preform (1) out of the channel (43, 44) is supplied with the sterile gas in order to produce a sterile gas corridor, which is formed outside of the channel and in which at least the opening region (21) of the preform (1) is guided, wherein the channel (43, 44) extends at least from the heating means (24) to the blow-moulding means (3, 25),
**characterised in that**
several radiation sources (60, 61, 62, 63, 66), which emit sterilising radiation onto the channel (43, 44) and/or onto the sterile gas corridor, which is formed outside of the channel, are arranged along the channel (43, 44) and so as to be located one behind the other in the transport direction, wherein in particular several radiation sources (60, 61, 62, 63, 66) are arranged at the channel (43, 44) so as to be located one behind the other, and are oriented toward the sterile gas corridor, which is formed outside of the channel, and/or wherein in particular at least some of the radiation sources (60, 61, 62, 63, 66) are oriented toward the opening region (21) of the preforms (1).

2. The method according to Claim 1, **characterised in that** several radiation sources (63), which emit sterilising radiation onto the internal walls (65) of the channel (43, 44), are arranged inside the channel (43, 44) and so as to be located one behind the other in the transport direction.

3. The method according to any one of the preceding claims, wherein the completely blown containers (2) are transported onwards to a filling means (50), **characterised in that** the channel (43, 44) extends at least from the blow-moulding means (3, 25) to the filling means (50).

4. The method according to the preamble of Claim 3 or method according to Claim 3, wherein the containers (2) filled in the filling means (50) are transported onwards to a closing means (51), **characterised in that** the channel (43, 44) extends at least from the filling means (50) to the closing means (51).

5. The method according to any one of the preceding claims, **characterised in that** the radiation sources (60, 61, 62, 63, 66) are at least partially UV emitters, and/or radiation sources (60, 61, 62, 63, 66), which are oriented toward the preforms (1) or toward the containers (2), respectively, are arranged in the heating means (24) and/or in the blow-moulding means (3, 25) and/or in the filling means (50) and/or in the closing means (51).

6. The method according to any one of the preceding claims, wherein the preforms (1) are guided on their transport path by at least one rotating transport wheel (26, 27, 28, 29, 35, 37), **characterised in that** the channel (43, 44) extends at least along the partial circumference of the transport wheel (26, 27, 28, 29, 35, 37) on which the transport takes place, wherein the preforms (1) are guided in particular on their transport path by at least two adjacent rotating transport wheels (26, 27, 28, 29, 35, 37), and the channel (43, 44) thereby extends at least along the partial circumferences of the transport wheels (26, 27, 28, 29, 35, 37) on which the transport takes place on the transport wheels (26, 27, 28, 29, 35, 37).

7. The method according to any one of the preceding claims, **characterised in that** the radiation sources (60, 61, 62, 63, 66) are switched on during the inline operation and/or during the start-up operation of the blow-moulding machine.

8. A device for producing blow-moulded containers (2), which are sterile at least in some areas, the device being provided with a heating means (24) for controlling the temperature of the preforms (1), and a blowing means (3, 25) for blow-moulding the preforms (1) into the containers (2), wherein the device has guide means (9, 26, 27, 28, 29, 35, 37), by means of which the preform (1) is guided on a transport path through the device, wherein at least one channel (43, 44), which conducts sterile gas and which has at least one outflow opening (46), out of which the sterile gas flows for forming a sterile gas corridor, is arranged along at least a subarea of the transport path for the preforms (1), wherein the channel (43, 44) and the outflow opening (46) are arranged and formed in such a way that at least the opening region (21) of the preforms (1) is guided in the sterile gas corridor, which is formed outside of the channel, wherein the channel (43, 44) extends at least from the heating means (24) to the blow-moulding means (3, 25),
**characterised in that**
several radiation sources (60, 61, 62, 63, 66), which are arranged and oriented so as to emit sterilising radiation onto the channel (43, 44) and/or onto the sterile gas corridor, are arranged along the channel (43, 44) and so as to be located one behind the other in the transport direction, wherein the outflow opening (46) is in particular oriented in such a way that the sterile gas flows with a propagation component in the transport direction.

9. The device according to Claim 8, **characterised in that** several radiation sources (60, 61, 62, 63, 66) are arranged at the channel (43, 44) so as to be located one behind the other in the transport direction and so as to be oriented toward the sterile gas corridor, and/or wherein at least some of the radiation sources (60, 61, 62, 63, 66) are arranged so as to be oriented toward the opening region (21) of the preforms (1), and/or.

10. The device according to any one of the preceding device claims, **characterised in that** several radiation sources (60, 61, 62, 63, 66), which emit sterilising radiation onto the internal wall (65) of the channel (43, 44), are arranged inside the channel (43, 44) and so as to be located one behind the other in the transport direction.

11. The device according to any one of the preceding device claims, wherein the completely blown containers (2) are transported onwards to a filling means (50), **characterised in that** the channel (43, 44) extends at least from the blow-moulding means (3, 25) to the filling means (50).

12. The device according to the preamble of Claim 11 or device according to Claim 11, wherein the containers (2) filled in the filling means (50) are transported onwards to a closing means (51), **characterised in that** the channel (43, 44) extends at least from the filling means (50) to the closing means (51).

13. The device according to any one of the preceding device claims, **characterised in that** the radiation sources (60, 61, 62, 63, 66) are at least partially UV emitters.

14. The device according to any one of the preceding device claims, **characterised in that** radiation sources (60, 61, 62, 63, 66), which are oriented toward the preforms (1) or toward the containers (2), respectively, are arranged in the heating means (24) and/or in the blow-moulding means (3, 25) and/or in the filling means (50) and/or in the closing means (51).

15. The device according to any one of the preceding device claims, wherein the preforms (1) are guided on their transport path by at least one rotating transport wheel (26, 27, 28, 29, 35, 37), **characterised in that** the channel (43, 44) extends at least along the partial circumference of the transport wheel (26, 27, 28, 29, 35, 37) on which the transport takes place, in particular wherein the preforms (1) are guided on their transport path by at least two adjacent rotating transport wheels (26, 27, 28, 29, 35, 37), and the channel (43, 44) thereby extends at least along the partial circumferences of the transport wheels (26, 27, 28, 29, 35, 37) on which the transport takes place on the transport wheels (26, 27, 28, 29, 35, 37).

## Revendications

1. Procédé de fabrication de récipients (2) au moins partiellement stériles moulés par soufflage, dans le cadre duquel une préforme (1) en un matériau thermoplastique est tout d'abord chauffée dans un dispositif de chauffage (24) le long d'un parcours dans une machine de moulage par soufflage puis, dans un dispositif de moulage par soufflage (3, 25), soumise à l'action d'un fluide sous pression, et dans le cadre duquel la préforme (1) est, sur au moins une partie de son parcours, guidée le long d'un canal (43, 44) conduisant un gaz stérile, le parcours de la préforme (1) étant soumis à l'action du gaz stérile sortant du canal (43, 44) de façon à former à l'extérieur du canal un corridor de gaz stérile dans lequel est conduite au moins la section d'embouchure (21) de la préforme (1), le canal (43, 44) s'étendant au moins du dispositif de chauffage (24) au dispositif de moulage par soufflage (3, 25), **caractérisé en ce que** sont agencées l'une derrière l'autre dans le sens de transport le long du canal (43, 44) plusieurs sources de rayonnement (60, 61, 62, 63, 66) qui émettent un rayonnement stérilisant sur le canal (43, 44) et/ou sur le corridor de gaz stérile formé à l'extérieur du canal, plusieurs sources de rayonnement (60, 61, 62, 63, 66) étant notamment disposées l'une derrière l'autre dans le sens de transport contre le canal (43, 44) et dirigées vers le corridor de gaz stérile formé à l'extérieur du canal, et/ou quelques unes au moins des sources de rayonnement (60, 61, 62, 63, 66) étant notamment dirigées vers la section d'embouchure (21) des préformes (1).

2. Procédé selon la revendication 1, **caractérisé en ce que** plusieurs sources de rayonnement (63) émettant le rayonnement stérilisant vers les parois intérieures (65) du canal (43, 44) sont agencées l'une derrière l'autre à l'intérieur du canal (43, 44) dans le sens de transport.

3. Procédé selon l'une des revendications précédentes, les récipients moulés (2) finis étant transportés vers un dispositif de remplissage (50), **caractérisé en ce que** le canal (43, 44) s'étend au moins du dispositif de moulage par soufflage (3, 25) jusqu'au dispositif de remplissage (50).

4. Procédé selon le préambule de la revendication 3 ou procédé selon la revendication 3, les récipients (2) remplis dans le dispositif de remplissage (50) étant transportés vers un dispositif d'obturation (51), **caractérisé en ce que** le canal (43, 44) s'étend au moins du dispositif de remplissage (50) jusqu'au dispositif d'obturation (51).

5. Procédé selon l'une des revendications précédentes, **caractérisé en ce que** les sources de rayonnement (60, 61, 62, 63, 66) sont en partie au moins des émetteur de rayons UV et/ou **en ce que** des sources de rayonnement (60, 61, 62, 63, 66) sont agencées dans le dispositif de chauffage (24) et/ou dans le dispositif de moulage par soufflage (3, 25) et/ou dans le dispositif de remplissage (50) et/ou dans le dispositif d'obturation(51) où elles sont dirigées respectivement vers les préformes (1) ou les récipients (2).

6. Procédé selon l'une des revendications précédentes, les préformes (1) étant guidées sur leur parcours par au moins une roue de transport (26, 27, 28, 29, 35, 37) en rotation, **caractérisé en ce que** le canal (43, 44) s'étend au moins le long d'une partie de la circonférence de la roue de transport (26, 27, 28, 29, 35, 37) sur laquelle le transport est effectué, les préformes (1) étant notamment guidées sur leur parcours par au moins deux roues de transport (26, 27, 28, 29, 35, 37) voisines en rotation et le canal (43, 44) s'étendant au moins le long d'une partie des circonférences des roues de transport (26, 27, 28, 29, 35, 37) sur lesquelles le transport est effectué.

7. Procédé selon l'une des revendications précédentes, **caractérisé en ce que** les sources de rayonnement (60, 61, 62, 63, 66) sont activées pendant le fonctionnement en ligne et/ou pendant la mise en route de la machine de moulage par soufflage.

8. Dispositif de fabrication de récipients (2) au moins partiellement stériles moulés par soufflage équipé d'un dispositif de chauffage (24) pour tempérer les préformes (1) et d'un dispositif de soufflage (3, 25) pour la transformation par soufflage des préformes (1) en récipients (2), le dispositif présentant des moyens de guidage (9, 26, 27, 28, 29, 35, 37) au moyen desquels la préforme (1) est guidée le long d'un parcours à travers le dispositif, un canal (43, 44) au moins conduisant un gaz stérile étant agencé le long d'au moins une partie du parcours des préformes (1), lequel canal présente au moins un orifice d'échappement (46) par lequel s'échappe le gaz stérile pour former un corridor de gaz stérile, le canal (43, 44) et l'orifice d'échappement (46) étant agencés et conformés de façon à ce qu'au moins la section d'embouchure (21) des préformes (1) soit guidée dans le corridor de gaz stérile formé à l'extérieur du canal, le canal (43, 44) s'étendant au moins du dispositif de chauffage (24) jusqu'au dispositif de moulage par soufflage (3, 25), **caractérisé en ce que** sont agencées l'une derrière l'autre le long du canal (43, 44) et dans le sens de transport plusieurs sources de rayonnement (60, 61, 62, 63, 66), lesquelles sont agencées et orientées de façon à émettre un rayonnement stérilisant sur le canal (43, 44) et/ou sur le corridor de gaz stérile, l'orifice d'échappement (46) étant notamment orienté de façon à ce que le gaz stérile s'écoule avec une composante de propagation dans le sens de transport.

9. Dispositif selon la revendication 8, **caractérisé en ce que** plusieurs sources de rayonnement (60, 61, 62, 63, 66) sont agencées l'une derrière l'autre le long du canal (43, 44) et dans le sens de transport et orientées vers le corridor de gaz stérile, et/ou quelques unes au moins des sources de rayonnement (60, 61, 62, 63, 66) étant agencées de façon à être dirigées vers la section d'embouchure (21) des préformes (1), et/ou.

10. Dispositif selon l'une des revendications précédentes concernant le dispositif, **caractérisé en ce que** plusieurs sources de rayonnement (60, 61, 62, 63, 66) émettant un rayonnement stérilisant vers les parois intérieures (65) du canal (43, 44) sont agencées l'une derrière l'autre à l'intérieur du canal (43, 44) dans le sens de transport.

11. Dispositif selon l'une des revendications précédentes concernant le dispositif, les récipients moulés (2) finis étant transportés vers un dispositif de remplissage (50), **caractérisé en ce que** le canal (43, 44) s'étend au moins du dispositif de moulage par soufflage (3, 25) jusqu'au dispositif de remplissage (50).

12. Dispositif selon le préambule de la revendication 11 ou procédé selon la revendication 11, les récipients (2) remplis dans le dispositif de remplissage (50) étant transportés vers un dispositif d'obturation (51), **caractérisé en ce que** le canal (43, 44) s'étend au moins du dispositif de remplissage (50) jusqu'au dispositif d'obturation (51).

13. Dispositif selon l'une des revendications précédentes concernant le dispositif, **caractérisé en ce que** les sources de rayonnement (60, 61, 62, 63, 66) sont en partie au moins des émetteur de rayons UV.

14. Dispositif selon l'une des revendications précédentes concernant le dispositif, **caractérisé en ce que** sont agencées dans le dispositif de chauffage (24) et/ou dans le dispositif de moulage par soufflage (3, 25) et/ou dans le dispositif de remplissage (50) et/ou dans le dispositif d'obturation (51) des sources de rayonnement (60, 61, 62, 63, 66) dirigées vers les préformes (1) ou les récipients (2).

15. Dispositif selon l'une des revendications précédentes concernant le dispositif, les préformes (1) étant guidées sur leur parcours par au moins une roue de transport (26, 27, 28, 29, 35, 37) en rotation, **caractérisé en ce que** le canal (43, 44) s'étend au moins le long d'une partie de la circonférence de la roue de transport (26, 27, 28, 29, 35, 37) sur laquelle le transport est effectué, les préformes (1) étant notamment guidées sur leur parcours par au moins deux roues de transport (26, 27, 28, 29, 35, 37) voisines en rotation et le canal (43, 44) s'étendant au moins le long d'une partie des circonférences des roues de transport (26, 27, 28, 29, 35, 37) sur lesquelles le transport est effectué.
